# EUROPEAN PATENT APPLICATION

(11) **EP 4 757 058 A1**
(43) Date of publication of application: **10.06.2026**
(21) Application number: 25219653.0
(22) Date of filing: 01.12.2025
(51) Int. Cl.: H01M 50/583

(54) **PROTECTION APPARATUS FOR BATTERY MANAGEMENT SYSTEM AND BATTERY MANAGEMENT SYSTEM**

(30) Priority: 05.12.2024 CN 202423004793 U
(71) Applicant: Eaton Intelligent Power Limited, Dublin D04 Y0C2 (IE)
(72) Inventor: HU, Wuhua, Shenzhen (CN); XIE, KAIJUN, Shenzhen (CN); LI, Haotian, Shenzhen (CN)
(74) Representative: Schwan Schorer & Partner mbB

(57) **Abstract**

The present disclosure provides a protection apparatus for a battery management system and a battery management system. The protection apparatus includes a primary protection module and a secondary protection module, where the primary protection module is a controllable switch assembly configured to cut off a battery circuit based on abnormal operating signals of a battery, the abnormal operating signals including a first-type abnormal operating signal and a second-type abnormal operating signal; and the secondary protection module includes an active fuse and a passive fuse that are connected in series with each other, and when the primary protection module cannot operate normally, the active fuse cuts off the battery circuit based on the first-type abnormal operating signal, and the passive fuse cuts off the battery circuit based on the second-type abnormal operating signal.

## Description

### TECHNICAL FIELD

The present disclosure belongs to the field of power electronics, and in particular, relates to a protection apparatus for a battery management system and a battery management system.

### BACKGROUND

The statements in this part are merely intended to provide background information related to the present disclosure, to help understand the present disclosure. The background information does not necessarily constitute the prior art.

A battery management system (BMS) is an electronic system configured to monitor and manage battery cells or battery packs, and is typically configured to implement functions such as voltage monitoring, current monitoring, temperature monitoring, battery equalization, charge/discharge control, state estimation, and fault detection. The main purpose of the BMS is to ensure that a battery runs under safe and effective conditions, so as to prolong the service life of the battery and maintain battery performance, thereby improving safety, reliability, and efficiency of the battery. The BMS is essential for applications such as new energy vehicles, energy storage systems, and portable electronic devices.

A protection design of the BMS is the key to ensuring safe, stable, and efficient operation of the battery, and is an essential part of the BMS. When a battery cell or battery pack operates abnormally (such as overcurrent, overvoltage, overheating, or short circuit), the BMS activates protection to cut off a circuit. For example, when detecting that a charging voltage of a battery exceeds a rated value, the BMS controls a charge MOS transistor to be switched off, so as to cut off a charge circuit; when detecting that a voltage of the battery falls below a safety threshold, the BMS controls a discharge MOS transistor to be switched off, so as to cut off a discharge circuit; and when detecting that the battery is short-circuited, the BMS controls the discharge MOS transistor to be switched off, so as to cut off the discharge circuit. In a specific application such as a new energy vehicle or an energy storage system, a lithium battery has a large capacity and a high power. To prevent a serious consequence caused by a fault, a dual protection design is typically used, that is, secondary protection is added. When primary protection cannot operate normally, the secondary protection is enabled. However, in the prior art, the secondary protection of the BMS needs to use an active fuse with a strong breaking capacity and a corresponding assembly kit, resulting in high costs and a large size.

### SUMMARY

Therefore, an objective of the present disclosure is to overcome the foregoing defects in the prior art and provide a protection apparatus for a battery management system. The protection apparatus includes a primary protection module and a secondary protection module, where the primary protection module is a controllable switch assembly configured to cut off a battery circuit based on abnormal operating signals of a battery, the abnormal operating signals including a first-type abnormal operating signal and a second-type abnormal operating signal; and the secondary protection module includes an active fuse and a passive fuse that are connected in series with each other, and when the primary protection module cannot operate normally, the active fuse is configured to cut off the battery circuit based on the first-type abnormal operating signal, and the passive fuse is configured to cut off the battery circuit based on the second-type abnormal operating signal.

According to the protection apparatus of the present disclosure, preferably, the second-type abnormal operating signal is that a current in the battery circuit exceeds a first preset current threshold.

According to the protection apparatus of the present disclosure, preferably, the first-type abnormal operating signal includes that the current in the battery circuit exceeds a second preset current threshold but is less than the first preset current threshold.

According to the protection apparatus of the present disclosure, preferably, the first-type abnormal operating signal further includes an overvoltage signal and an overtemperature signal.

According to the protection apparatus of the present disclosure, preferably, the first preset current threshold is 3 to 7 times the second preset current threshold.

According to the protection apparatus of the present disclosure, preferably, the active fuse and the passive fuse are surface-mount devices.

According to the protection apparatus of the present disclosure, preferably, the active fuse is a three-terminal fuse.

According to the protection apparatus of the present disclosure, preferably, the controllable switch assembly is configured to be bidirectionally conductive, and is selectively controlled to cut off a battery discharge circuit and a battery charge circuit based on the abnormal operating signals.

According to the protection apparatus of the present disclosure, preferably, the controllable switch assembly includes a discharge transistor and a charge transistor that are connected in reverse series, and the discharge transistor and the charge transistor each have a diode connected in reverse parallel.

The present disclosure further provides a battery management system, including a micro control unit, a battery sampling unit, and the protection apparatus according to the present disclosure, where the battery sampling unit is configured to collect battery running parameters and provide the battery running parameters to the micro control unit, and the micro control unit is configured to provide abnormal operating signals to the protection apparatus based on the battery running parameters.

Compared with the prior art, the battery management system of the present disclosure is small in size, low in cost, and simple to install.

### BRIEF DESCRIPTION OF DRAWINGS

The following further describes embodiments of the present disclosure with reference to the accompanying drawings, where:
FIG. 1 is a schematic block diagram of a protection apparatus for a battery management system according to an embodiment of the present disclosure;
FIG. 2 is a schematic circuit topology of a primary protection module of a protection apparatus for a battery management system according to an embodiment of the present disclosure;
FIG. 3 is a schematic diagram of a battery management system according to an embodiment of the present disclosure;
FIG. 4 is an actual product comparison diagram between a component of a secondary protection module of a protection apparatus for a battery management system in the prior art and a component of a secondary protection module of a protection apparatus for a battery management system in the present disclosure; and
FIG. 5 is a schematic comparison diagram between a component of a secondary protection module of a protection apparatus for a battery management system in the prior art and a component of a secondary protection module of a protection apparatus for a battery management system in the present disclosure.

### DETAILED DESCRIPTION

To make the objectives, technical solutions, and advantages of the present disclosure clearer, the following further describes the present disclosure in detail through embodiments with reference to the accompanying drawings. It should be understood that the specific embodiments described herein are merely used to explain the present disclosure, and are not intended to limit the present disclosure.

An embodiment of the present disclosure provides a protection apparatus for a battery management system BMS. The protection apparatus includes a primary protection module and a secondary protection module, where the primary protection module is a controllable switch assembly configured to cut off a battery circuit based on abnormal operating signals of a battery, the abnormal operating signals including a first-type abnormal operating signal and a second-type abnormal operating signal; and the secondary protection module includes an active fuse and a passive fuse that are connected in series with each other, and when the primary protection module cannot operate normally, the active fuse is configured to cut off the battery circuit based on the first-type abnormal operating signal, and the passive fuse is configured to cut off the battery circuit based on the second-type abnormal operating signal. Because the passive fuse is typically used as a protector for a short circuit and an overcurrent, short-circuit and overcurrent protection in the present disclosure is undertaken by the passive fuse, which reduces a requirement for a breaking capacity (i.e., a maximum current value that the fuse can safely cut off at a rated voltage) of the active fuse and reduces the size and costs of the active fuse.

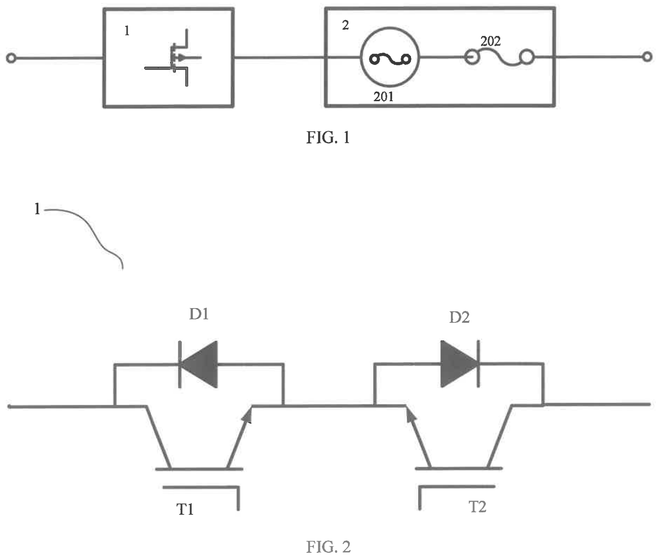

Referring to the schematic block diagram of a protection apparatus for a BMS according to an embodiment of the present disclosure shown in FIG. 1, the protection apparatus is connected to a battery circuit, and includes a primary protection module 1 and a secondary protection module 2 that are connected in series with each other. The primary protection module 1 is a transistor assembly, and includes at least one charge transistor and one discharge transistor that cut off a battery circuit based on abnormal operating signals (such as an overvoltage signal, an overcurrent signal, an overheat signal, or a short-circuit signal). For example, the charge transistor cuts off a battery charge circuit based on a battery overvoltage signal or a charge overcurrent signal, and the discharge transistor cuts off a battery discharge circuit based on a discharge overcurrent signal, an overheat signal, or a short-circuit signal. The secondary protection module 2 includes an active fuse 201 and a passive fuse 202 that are connected in series with each other. When the battery management system detects an abnormal operating signal, if a primary protection module 1 of the BMS cannot operate normally (for example, there is a transistor assembly fault), a secondary protection module 2 cuts off the battery circuit, where the active fuse 201 is actively cut off based on a first-type abnormal operating signal (for example, an abnormal operating signal other than an overcurrent (for example, greater than 1000 A) signal or a short-circuit signal)), and the passive fuse 202 is rapidly blown based on a second-type abnormal operating signal (an overcurrent signal or a short-circuit signal). In this way, the present disclosure does not need an active fuse with a strong breaking capacity.

In an embodiment of the present disclosure, the active fuse 201 is an intelligent fuse, which monitors signals such as a current, a voltage, and a temperature in a circuit in real time by using a built-in sensor (e.g., a current sensor, a voltage sensor, or a temperature sensor). When the signal exceeds a set upper limit, the active fuse cuts off the circuit to implement circuit protection. In another embodiment, the active fuse 201 is a three-terminal fuse. A first terminal and a second terminal of the active fuse are connected to a battery circuit, and a third terminal is a control terminal, which is configured to receive a control signal from a control unit, so as to cut off the circuit.

The passive fuse 202 of the present disclosure is based on a physical effect. When a current passing through the fuse exceeds a rated value of the fuse, a fuse wire or a fuse element inside the fuse melts due to overheating, thereby cutting off the circuit to provide protection. In the present disclosure, a fast passive fuse is preferably used, for example, a fuse in which pure silver is used as a fuse element is used, which has a strong breaking capacity and a short breaking time.

According to another embodiment of the present disclosure, both the active fuse 201 and the passive fuse 202 use a surface-mount device (SMD) package, and can be mounted on a printed circuit board (PCB). By means of the SMD package, the assembly density is high, and an electronic product has a small size and a light weight; the size and weight of a surface-mount component are usually about 1/10 of those of a traditional through-hole component; the reliability is high, the vibration resistance is strong, and the soldering joint defect rate is low; the high frequency features are good, and electromagnetic and radio frequency interferences are reduced; and it is easy to implement automation, improve production efficiency, and reduce costs by up to 30% to 50%.

Referring to a schematic circuit topology of a primary protection module 1 of a protection apparatus for a BMS according to an embodiment of the present disclosure shown in FIG. 2, the primary protection module 1 includes a discharge transistor T1 and a charge transistor T2, a diode D1 is disposed in reverse parallel with the discharge transistor T1, a diode D2 is disposed in reverse parallel with the charge transistor T2, and the discharge transistor T1 and the charge transistor T2 are connected in reverse series. In the present disclosure, the reverse series connection between transistors means that two transistors are connected in a back-to-back manner. For example, sources of the two transistors are connected to each other (a common-source structure) or drains of the two transistors are connected to each other (a common-drain structure, as shown in FIG. 2). In this configuration, when a voltage is applied in a forward direction, one transistor is switched on and the other is switched off; when a voltage is applied in a reverse direction, the roles of the switched-on and switched-off transistors are swapped; and the reverse parallel connection between a transistor and a diode implements bidirectional current flow. For example, in the structure shown in FIG. 2, the anodes of the diodes D1 and D2 are connected to the drains of the transistors T1 and T2, respectively. When the transistors are switched off, the diodes are turned on. In this embodiment, when the discharge transistor T1 receives an abnormal operating signal such as an overtemperature or overcurrent, the discharge transistor is switched off. In this case, a discharge circuit is cut off, and a charge circuit is turned on through the charge transistor T2 and the diode D1. When the charge transistor T2 receives an abnormal operating signal such as a battery overvoltage, the charge transistor is switched off. In this case, the charge circuit is cut off, and the discharge circuit is turned on through the discharge transistor T1 and the diode D2.

According to another embodiment of the present disclosure, the primary protection module 1 of the protection apparatus for the BMS is implemented by using another controllable switch assembly that can implement bidirectional conduction, and the another controllable switch assembly selectively cuts off a battery discharge circuit and a battery charge circuit based on received abnormal operating signals. For example, the controllable switch assembly includes a first controllable switch and a second controllable switch. The first controllable switch is disposed in the battery discharge circuit, and the second controllable switch is disposed in the battery charge circuit. In the present disclosure, a controllable switch is any controllable switch element that can be ON/OFF based on a control signal, including a MOSFET, an IGBT, or the like.

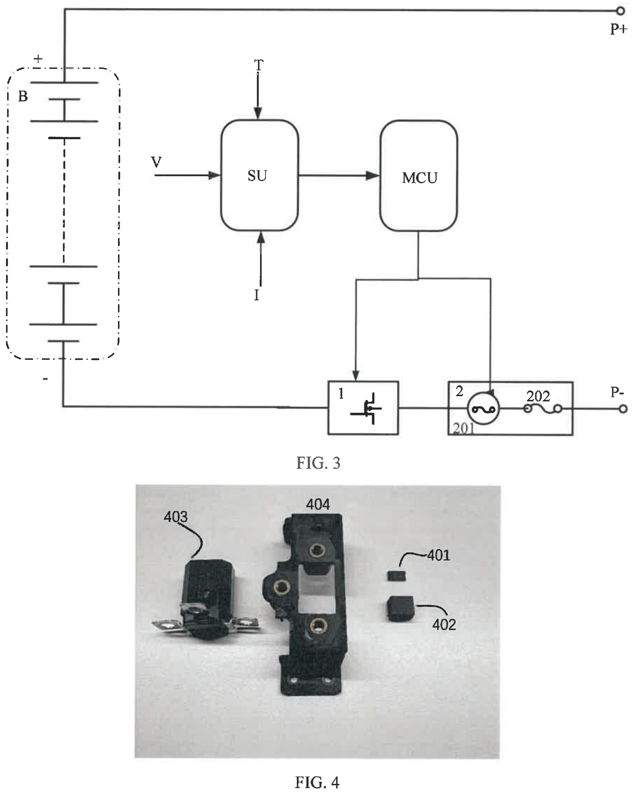

An embodiment of the present disclosure further provides a battery management system (BMS). Referring to a schematic diagram of the battery management system according to this embodiment shown in FIG. 3, the BMS includes a micro control unit (MCU), a battery sampling unit (SU), and the protection apparatus shown in FIG. 1. A voltage of a battery B is provided to a power supply terminal, the positive electrode P+ of the power supply terminal is electrically connected to the positive electrode of the battery B, and the negative electrode P- of the power supply terminal is electrically connected to the negative electrode of the battery B through the protection apparatus. The battery sampling unit (SU) collects battery running parameters such as a battery voltage V, a temperature T, and a current I, and provides the battery running parameters to the micro control unit (MCU). The micro control unit (MCU) provides abnormal operating signals to the protection apparatus based on the received battery running parameters. Preferably, the micro control unit (MCU) compares the battery running parameters with preset thresholds, and provides cut-off signals to the active fuses 201 of the primary protection module 1 and the secondary protection module 2 of the protection apparatus based on comparison results. Specific details of the protection apparatus are the same as those in the foregoing embodiments, and are not described herein again.

According to another embodiment of the present disclosure, the primary protection module 1 of the protection apparatus for the BMS is disposed between the positive electrode P+ of the power supply terminal and the positive electrode of the battery B, and the secondary protection module 2 is disposed between the negative electrode P- of the power supply terminal and the negative electrode of the battery B, or vice versa.

According to another embodiment of the present disclosure, the active fuse 201 and a passive fuse 202 of the secondary protection module 2 are disposed at different power supply terminals. For example, the active fuse 201 is disposed between the positive electrode P+ of a power supply terminal and the positive electrode of the battery B, and the passive fuse 202 is disposed between the negative electrode P- of a power supply terminal and the negative electrode of the battery B, or vice versa. In either case, the active fuse 201 and the passive fuse 202 are connected in series in a battery circuit.

In one embodiment, the battery management system (BMS) includes a current sensor, a voltage sensor, and a temperature sensor. A current sensor, a voltage sensor, and a temperature sensor that are known in the art are all applicable to the present disclosure, and details are not described herein again.

In another embodiment, the battery management system (BMS) further includes an analog front end (AFE), an electrically erasable programmable read-only memory (EEPROM), a low-dropout linear regulator (LDO), a standby power supply (SPS), and the like. The analog front end is a monitoring chip with multiple sampling channels, which monitors voltages and temperatures of multi-stage series-connected battery cells in real time and supports a balance function of batteries. The electrically erasable programmable read-only memory is mainly configured to store key information such as configuration parameters, calibration data, and user settings that are related to a battery. The low-dropout linear regulator is a key power management component, which is configured to provide a stable output voltage while allowing a small difference between an input voltage and the output voltage. The standby power supply is a backup power supply or a backup control unit configured to ensure safe and stable operation of a battery.

A new dual protection design is used for the protection apparatus for the battery management system in the present disclosure. In particular, secondary protection can be implemented by using an active fuse with a relatively weak breaking capacity and a fast passive fuse with a relatively strong breaking capacity. If a current in the battery circuit is greater than a first preset current threshold (for example, 1000 A) when the primary protection module cannot operate normally, the fast passive fuse with a relatively strong breaking capacity is blown to implement secondary protection. When the current in the battery circuit is greater than a second preset current threshold (for example, 150 A to 300 A) and is less than the first preset current threshold, a battery voltage is greater than a preset voltage threshold, or a temperature is greater than a preset temperature threshold, the active fuse with a weak breaking capacity is cut off to implement secondary protection. The preset thresholds in the present disclosure are set according to actual situations. In particular, the first preset current threshold is greater than the second preset current threshold. Preferably, the first preset current threshold is 3 to 7 times the second preset current threshold.

A manner in the present disclosure in which the active fuse and the passive fuse are combined to implement secondary protection does not require to use of an active fuse with a strong breaking capacity. The active fuse with a strong breaking capacity is expensive and large in size, and the active fuse with a weak breaking capacity used in the present disclosure is cheap and small in size. Therefore, the costs and size of the battery management system in the present disclosure are reduced. In addition, the active fuse with a strong breaking capacity needs additional assembly kits and screws for fixing during installation, which has a large size and high labor costs. Both the active fuse and passive fuse in the present disclosure use an SMD package and can be installed on a PCB, which greatly reduces the size and labor costs.

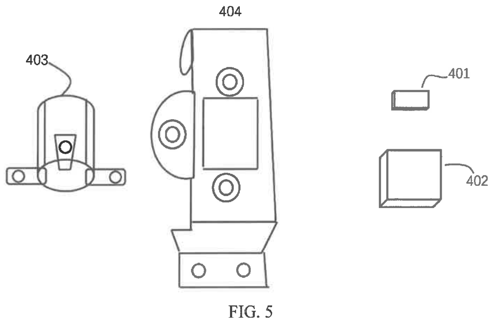

To reflect an effect of the present disclosure, the inventor provides an actual product comparison diagram and a schematic comparison diagram between a component of a secondary protection module of a protection apparatus for a battery management system in the prior art and a component of a secondary protection module of a protection apparatus for a battery management system in the present disclosure, as shown in FIG. 4 and FIG. 5 respectively. 401 is an active fuse with a weak breaking capacity according to the present disclosure, 402 is a passive fuse with a strong breaking capacity according to the present disclosure, 403 is an active fuse with a strong breaking capacity in the prior art, and 404 is an assembly kit of the active fuse in the prior art. It is clear from the figures that the size of the combination of the active fuse with a weak breaking capacity and the passive fuse with a strong breaking capacity in the present disclosure is much smaller than that of the combination of the active fuse with a strong breaking capacity and the assembly kit in the prior art. The size of the secondary protection module in the prior art is approximately tens of times that of the secondary protection module in the present disclosure.

In addition, the inventor compares an installation structure of the secondary protection module in the prior art with an installation structure of the secondary protection module in the present disclosure. The secondary protection module in the prior art needs screws and the assembly kit to be fixedly connected to a circuit. However, the secondary protection module of the present disclosure is installed on a PCB by using an SMD package. Obviously, the secondary protection module in the present disclosure has a smaller size and easier installation.

In addition, the inventor further compares the costs of the secondary protection module in the prior art with the costs of the secondary protection module in the present disclosure, as shown in the following Table 1:

**Table 1**

| Component | The prior art (RMB) | The present disclosure (RMB) | Cost reduction (RMB) |
|---|---|---|---|
| Active fuse | 70 | 8 | 62 |
| Assembly kit/Passive fuse | 10 | 5 | 5 |
| Overall | 80 | 13 | 67 |

It can be seen that the costs are reduced by 83.75% by using the design of the present disclosure.

In addition, for the design of the prior art, it is difficult to find an applicable active fuse with a strong breaking capacity and an applicable fuse assembly kit in the market. For the design of the present disclosure, it is very easy to find an active fuse with a weak breaking capacity and a fast passive fuse in the market. The new design can effectively resolve supply chain problems.

Although the present disclosure has been described by using preferred embodiments, the present disclosure is not limited to the embodiments described herein, and includes various changes and variations without departing from the scope of the present disclosure.

## Claims

1. A protection apparatus for a battery management system, comprising a primary protection module and a secondary protection module, wherein the primary protection module is a controllable switch assembly configured to cut off a battery circuit based on abnormal operating signals of a battery, the abnormal operating signals comprising a first-type abnormal operating signal and a second-type abnormal operating signal; and the secondary protection module comprises an active fuse and a passive fuse that are connected in series with each other, and when the primary protection module cannot operate normally, the active fuse is configured to cut off the battery circuit based on the first-type abnormal operating signal, and the passive fuse is configured to cut off the battery circuit based on the second-type abnormal operating signal.

2. The protection apparatus according to claim 1, wherein the second-type abnormal operating signal is that a current in the battery circuit exceeds a first preset current threshold.

3. The protection apparatus according to claim 2, wherein the first-type abnormal operating signal comprises that the current in the battery circuit exceeds a second preset current threshold but is less than the first preset current threshold.

4. The protection apparatus according to claim 3, wherein the first-type abnormal operating signal further comprises an overvoltage signal and an overtemperature signal.

5. The protection apparatus according to claim 3, wherein the first preset current threshold is 3 to 7 times the second preset current threshold.

6. The protection apparatus according to any one of claims 1 to 5, wherein the active fuse and the passive fuse are surface-mount devices.

7. The protection apparatus according to any one of claims 1 to 5, wherein the active fuse is a three-terminal fuse.

8. The protection apparatus according to any one of claims 1 to 5, wherein the controllable switch assembly is configured to be bidirectionally conductive, and is controlled to selectively cut off a battery discharge circuit and a battery charge circuit based on the abnormal operating signals.

9. The protection apparatus according to claim 8, wherein the controllable switch assembly comprises a discharge transistor and a charge transistor that are connected in reverse series, and the discharge transistor and the charge transistor each have a diode connected in reverse parallel.

10. A battery management system, comprising a micro control unit, a battery sampling unit, and the protection apparatus according to any one of claims 1 to 9, wherein the battery sampling unit is configured to collect battery running parameters and provide the battery running parameters to the micro control unit, and the micro control unit is configured to provide abnormal operating signals to the protection apparatus based on the battery running parameters.
